# EUROPEAN PATENT APPLICATION

(11) **EP 2 746 886 A2**
(43) Date of publication of application: **25.06.2014**
(21) Application number: 13306728.0
(22) Date of filing: 16.12.2013
(51) Int. Cl.: G05B 23/02

(54) **Predicting appliance failure using aggregate power/energy data**

(30) Priority: 20.12.2012 US 201261740203 P
(71) Applicant: Orange, 75015 Paris (FR)
(72) Inventor: Mandanapu, Subash, San Bruno, CA 94066 (US); Akinchan, Anant, Fremont, CA 94536 (US)

(57) **Abstract**

Failure of an appliance is predicted by accessing multiple days of aggregate power use data for a home, searching for peaks in the power use data that occurred during different days in the multiple days, determining that a peak during a later day of the multiple days has a larger magnitude than a peak during an earlier day, and identifying an appliance responsible for the larger magnitude of the peak during the later day. A user interface is then sent to a user device to indicate that the identified appliance is failing.

## Description

### BACKGROUND

As appliances begin to fail, their power/energy use changes. As a result, it is possible to predict failure of an appliance if its power/energy use can be tracked. Typically, tracking such power/energy use requires a separate power/energy meter for each appliance. In a home setting, such hardware-based solutions are not economical because they require multiple meters to be installed in the home.

Recently, smart meters have been developed that provide histograms of aggregate power/energy use within a home. However, isolating power/energy use for any one appliance from the aggregate signal is difficult when one of the appliances is beginning to fail. In particular, since the power/energy use of the failing appliance is changing, templates built based on the ideal power/energy use of each appliance will not be effective in identifying which appliances are operating at any one time. In addition, changes in power/energy use in a home can be caused by other factors such as the weather, new appliances, and the opening of doors and windows. As a result, the problem of identifying a failing appliance using an aggregate power/energy signal has not been solved.

The discussion above is merely provided for general background information and is not intended to be used as an aid in determining the scope of the claimed subject matter. The claimed subject matter is not limited to implementations that solve any or all disadvantages noted in the background.

### SUMMARY

Failure of an appliance is predicted by accessing multiple days of aggregate power use data for a home, searching for peaks in the power use data that occurred during different days in the multiple days, determining that a peak during a later day of the multiple days has a larger magnitude than a peak during an earlier day, and identifying an appliance responsible for the larger magnitude of the peak during the later day. A user interface is then sent to a user device to indicate that the identified appliance is failing.

In accordance with some embodiments, before searching for peaks in the power use data, the power use data is filtered to remove peaks that occur on days with unusual weather. In accordance with some embodiments, searching for peaks in the power use data comprises setting a peak range and identifying all peaks within the peak range. In accordance with some embodiments, identifying an appliance comprises applying a time of day of at least one peak to a use template. In accordance with some embodiments, identifying an appliance further comprises utilizing power consumption specifications for appliances. In accordance with some embodiments, identifying an appliance further comprises providing a user interface listing predicted appliances to a user and receiving an indication of which of the predicted appliances were operated during a time period. In accordance with some embodiments, identifying an appliance further comprises providing a user interface with an instruction to turn on an appliance at a specified time. In accordance with some embodiments, selecting the specified time to isolate an appliance's power consumption from other appliances' power consumption.

A system includes a power use database that receives and stores power use data for a home, an analysis engine that identifies increasing peaks in the use data and a communication engine that receives feedback from a user to isolate an appliance operating during a peak in the use data and that indicates that the appliance is failing to a user.

In accordance with some embodiments, before identifying increasing peaks in the use data, the analysis engine filters the use data based on weather data to remove use data associated with weather that alters power use. In accordance with some embodiments, the analysis engine identifies increasing peaks by setting a range of peak values, identifying all peaks within the range of peak values, and determining if the identified peaks are increasing over time. In accordance with some embodiments, the analysis engine further identifies a list of possible appliances operating during a peak in use based on at least one template of use. In accordance with some embodiments, the communication engine further provides a user interface to solicit feedback from the user wherein the user interface requests confirmation of which of a list of possible appliances was on during a designated time period. In accordance with some embodiments, the communication engine further provides a user interface to solicit feedback from the user wherein the user interface requests that the user turn on an appliance during a specified time period and wherein the feedback comprises the user turning on the appliance during the specified time period.

A computer-readable storage medium has computer-executable instructions that cause a processor to perform steps of accessing a memory to retrieve power use data for a home, requesting weather data for an area around the home, and filtering the power use data to remove power use data associated with days when an outside temperature was unusual to form filtered power use data. Peaks in the filtered power use data are grouped into groups and it is determined that peaks within a group have increased over time. Possible appliances that operated during the peaks of the group are identified and feedback is received to isolate an appliance that caused the increase in the peaks over time. A notification is then transmitted that the isolated appliance is failing.

In accordance with some embodiments, identifying possible appliances that operated during the peaks of the group comprises using a template of appliances used during a period of time associated with at least one of the peaks. In accordance with some embodiments, the power use data comprises aggregate power use data for the home as a whole. In accordance with some embodiments, receiving feedback comprises receiving an indication of which of the possible appliances was actually operated during the peaks. In accordance with some embodiments, receiving feedback comprises receiving new power use data. In accordance with some embodiments, the new power use data comprises power use data for a period of time when an appliance was operated after the processor instructed a user to operate the appliance during that period of time.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 provides a block diagram of elements used in various embodiments to identify failing appliances.
FIG. 2 provides a flow diagram of a method of identifying a failing appliance.
FIG. 3 provides a histogram of power use for a first day.
FIG. 4 provides a histogram of power use for a second day.
FIG. 5 provides a histogram of power use for a third day.
FIG. 6 provides a histogram of power use for a fourth day.
FIG. 7. provides an example of a user interface requesting information from a user.
FIG. 8 provides an example of a user interface requesting information about new appliances.
FIG. 9 provides an example of a user interface providing an instruction to the user to assist in isolating an appliance.
FIG. 10 provides a block diagram of a computing device.

### DETAILED DESCRIPTION

Embodiments described below provide a method and system for analyzing aggregate power or energy data (power/energy data) for a home to identify an appliance in the home that may be failing. The method filters the power/energy data to remove changes in the power/energy use that are due to weather events. The filtered power/energy data is then analyzed to identify peaks that are increasing over time. A set of candidate appliances are identified for the peaks based on use templates and manufacturer specifications. A communication engine then communicates with a user to isolate the single appliance that may be failing.

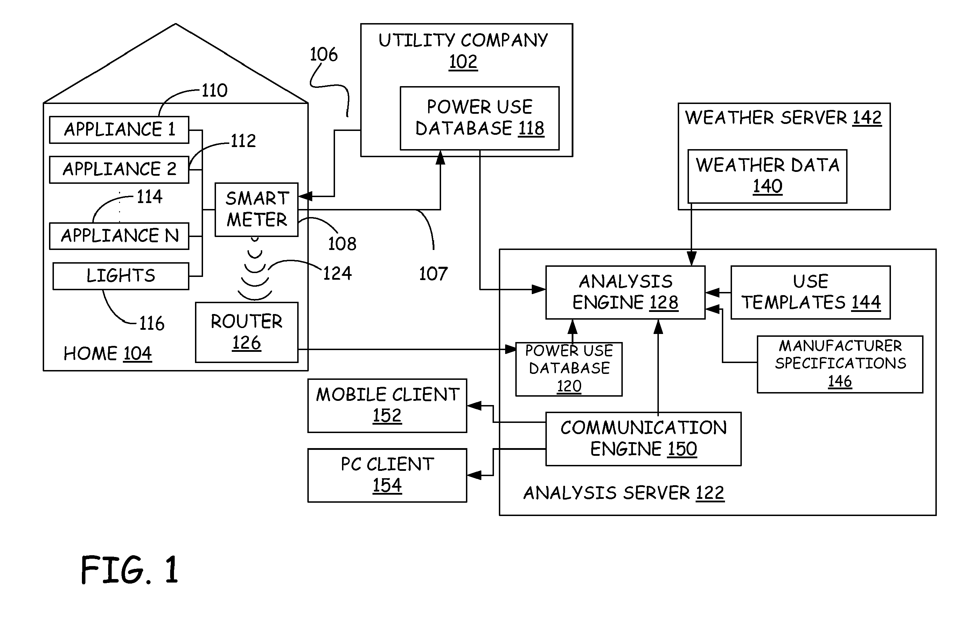

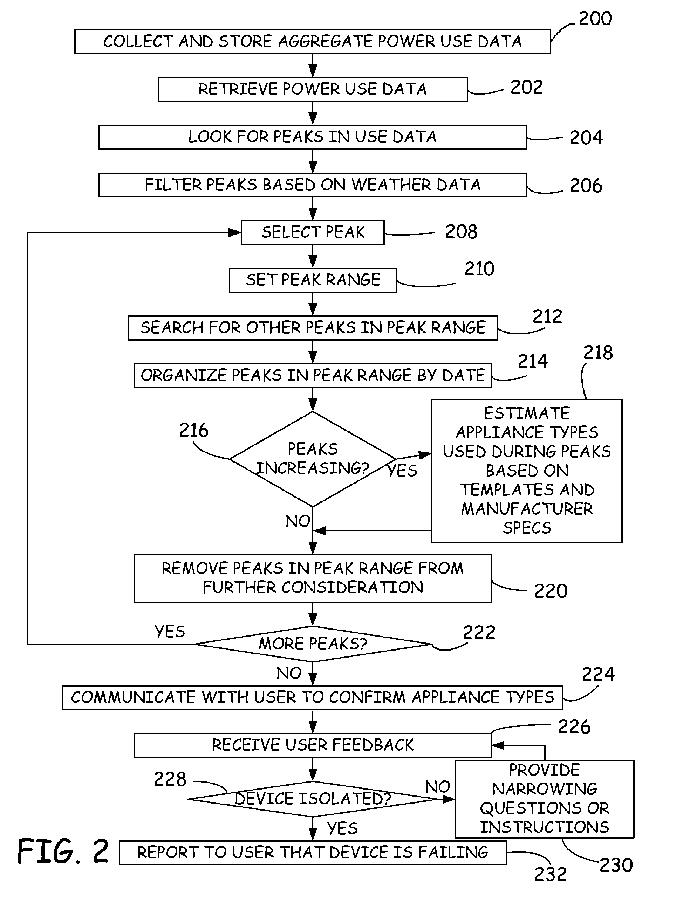

FIG. 1 provides a block diagram of elements used in accordance with various embodiments. FIG. 2 provides a flow diagram of a method for identifying and reporting that a device is failing.

In FIG. 1, a utility company 102 provides power/energy to a home 104 along power lines 106. Within home 104, the aggregate power/energy provided to home 104 along power lines 106 is detected by a smart meter 108 when the power is distributed to various appliances and lights such as appliances 110, 112, 114 and lights 116 in home 104. In this context, an appliance refers to any device that uses electricity provided by utility company 102. Examples of appliances include refrigerators, freezers, electric stoves, electric ovens, microwave ovens, electric heaters, air conditioning units, fans, computers, televisions, set top boxes, disc players, vacuums, dishwashers, washing machines, dryers, irons, hair dryers, and the like.

In step 200 of FIG. 2, smart meter 108 generates a histogram of aggregate power/energy use within home 104 as a whole where the power/energy use may be sampled at a frequency of once every minute or at greater or lesser frequencies as desired. In accordance with one embodiment, smart meter 108 stores the power/energy use data in a power/energy use database 118 of utility company 102 through a network or a telephone line connection 107. In accordance with some embodiments, smart meter 108 stores aggregate power/energy use data in a power/energy use database 120 of an analysis server 122 using a wireless connection 124 to a wireless router 126, which is connected to analysis server 122 through a network such as the Internet.

At step 202, an analysis engine 128 executed by analysis server 122 retrieves or accesses the stored aggregate power/energy use data for home 104 from power/energy use database 118 or from power/energy use database 120. At step 204, analysis engine 128 looks for peaks in the power/energy use data.

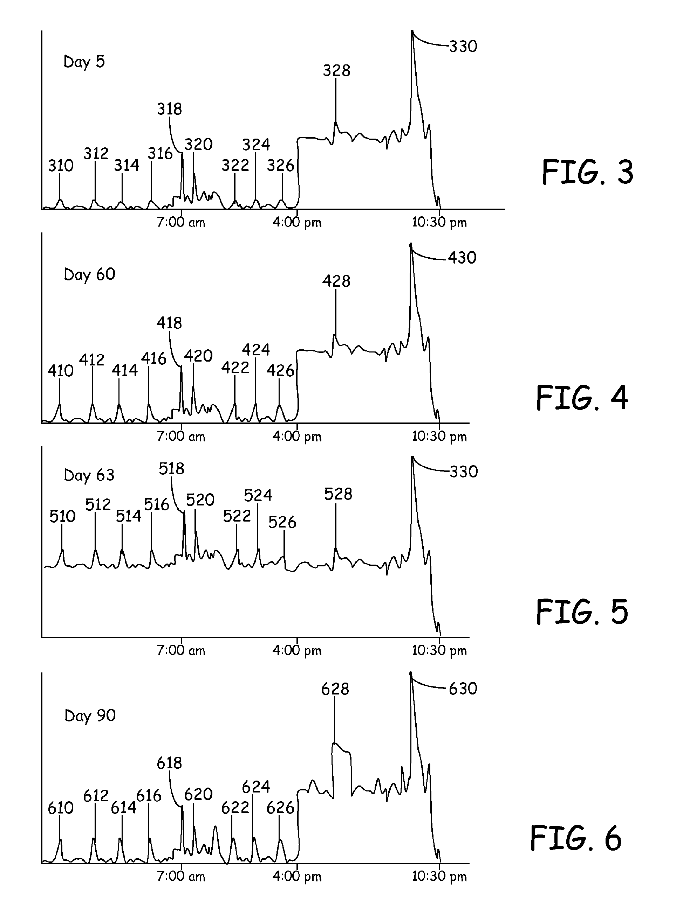

FIGS. 3-6 provide examples of aggregate power use histograms for four respective days. Each histogram graph of FIG. 3-6 represents an aggregate power use of a home for a single day denoted as DAY 5, DAY 60, DAY 63, and DAY 90 in the figures. Thus, the histograms progress through time with FIG. 3 representing the earliest date and FIG. 6 representing the latest date. In each graph, power is shown along the vertical axis and time of day is shown along the horizontal axis. Those skilled in the art will recognize that each of the histograms could provide energy instead of power along the vertical axis.

In the histograms of FIGS. 3-6, several peaks in power use are shown such as peaks 310, 312, 314, 316, 318, 320, 322, 324, 326, 228 and 330 in FIG. 3; peaks 410, 412, 414, 416, 418, 420, 422, 424, 426, 428 and 430, in FIG. 4; peaks 510, 512, 514, 516, 518, 520, 522, 524, 526, 528 and 530, in FIG. 5; and peaks 610, 612, 614, 616, 618, 620, 622, 624, 626, 628 and 630 in FIG. 6.

At step 206, an analysis engine 128 filters peaks based on weather data 140 provided by weather server 142. In particular, analysis engine 128 examines weather data 140 for an area around the home to identify days during which the weather, in particular, the temperature, was unusual such that it would have altered power use. In accordance with one embodiment, weather for a day will be considered unusual if the temperature is within 5°F (2.77°C) of a record or sets a record. In accordance with one embodiment, peaks are filtered by removing the entire power histogram for the day on which the unusual weather took place. For example, in FIGS. 3-6, FIG. 5 represents an unusual weather day. In particular, in FIG. 5, the weather is unusually warm and as a result, the air conditioner has run for the entire day. This has caused the morning and overnight power use to be higher than on other days. As a result, peak 516 in FIG. 5, which corresponds to peak 316 of FIG. 3, peak 416 of FIG. 4 and peak 616 of FIG. 6, is higher than those other peaks. By removing the DAY 63 histogram of FIG. 5, a more accurate assessment of the electrical use of the appliances in the home can be made.

After filtering peaks based on weather data, analysis engine 128 selects a peak at step 208. Based on the selected peak, analysis engine sets a peak range 210. In accordance with one embodiment, the peak range is equal to the magnitude of the selected peak plus or minus 5% of the selected magnitude. For example, if the peak was 10 kilowatts (kW), the peak range would be 9.5 kW to 10.5 kW.

At step 212, analysis engine 128 searches for other peaks in the filtered peaks that are within the peak range to form a group of peaks. For example, in FIGS. 3, 4 and 6, the selected peak is peak 310 and peaks 312, 314, 316, 322, 324, 326, 410, 412, 414, 416, 422, 424, 426, 610, 612, 614, 616, 622, 624 and 626 are identified at step 212.

At step 214, analysis engine 128 organizes the peaks in the peak range by date from earliest date to latest date. At step 216, analysis engine 128 determines if the peaks are increasing by comparing the peaks for the latest date to the peaks of earlier dates. If the peaks are not increasing in step 216, the appliances associated with the peaks are operating as expected. If however, the peaks are increasing at step 216, it may be an indication that at least one of the appliances responsible for the peaks is about to fail.

At step 218, analysis engine 128 estimates the appliance types that are operating during the peaks in the group of peaks. In accordance with one embodiment, the appliance types are estimated using use templates 144 and manufacturer specifications 146. Use templates 144 provide combinations of possible appliance types that may be used during different times of the day. For example, coffeepots, toasters, microwaves, hairdryers, and electric stoves tend to be used between 6:30 and 9:30 in the morning while air conditioners, televisions, washing machines, dryers, and dishwashers tend to be used between 6:00 and 10:00 in the evening. Thus, at step 218, analysis engine 128 applies a time of day of at least one peak to the use templates 144 to retrieve one or more collections of appliances that are typically used during that time of day. Manufacturer specifications 146 provide power/energy consumption data for various makes and models of appliances. Using the manufacturer specifications 146 and the use templates 144, analysis engine 128 attempts to find a combination of appliances that could use the amount of power represented by the selected peaks. Note that because one of the appliances is suspected of failing, the manufacturer specifications 146 are only a guideline to the actual power use of the appliances. Therefore, during the identification of the possible appliances being used during the peaks, analysis engine 128 includes a margin above the manufacturer specifications 146 to account for one or more of the appliances using more power than the manufacturer specifications 146.

After the appliance types have been estimated for the group of peaks, the peaks in the peak range are removed from further consideration in step 220. In step 222, if there are more peaks in the histogram data, a new peak is selected at step 208 and a new peak range is set at step 210 based on the newly selected peak. Steps 212, 214, 216, 218 and 220 are then repeated for the new group of peaks. When there are no more peaks at step 222, analysis engine 128 invokes a communication engine 150 to communicate with a user to confirm the appliance types identified for each of the peak groups. In accordance with one embodiment, communication engine 150 communicates with the user by providing one or more user interfaces through either a mobile client 152 or a PC client 154.

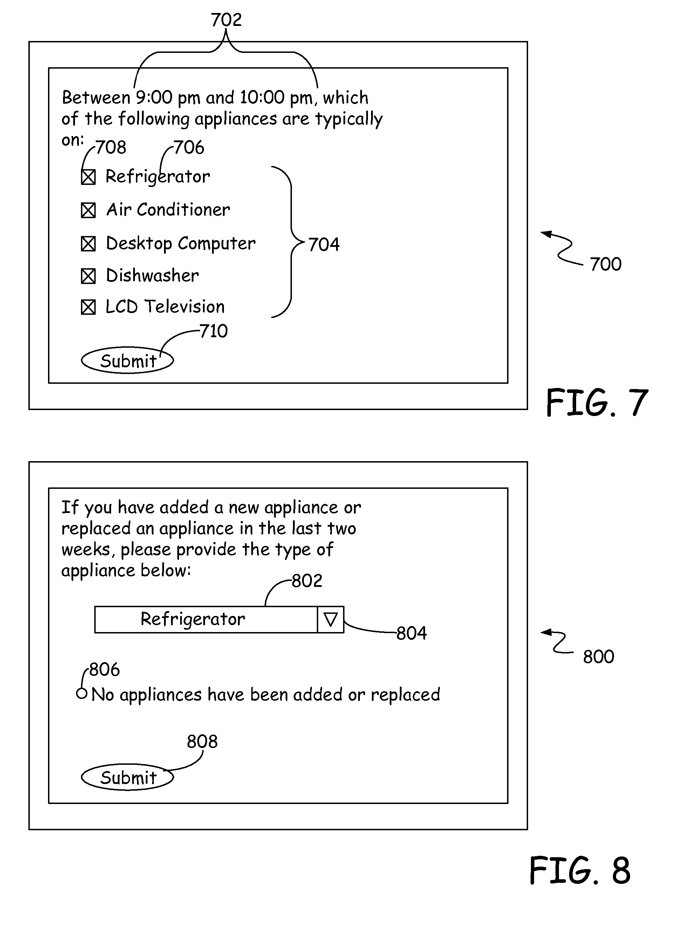

FIG. 7 provides an example of a user interface 700 used to confirm appliance types that are operating during a peak use time. In user interface 700, a time range 702 is provided together with a list 704 of selectable appliances that analysis engine 128 predicted were operating during time range 702. Each of appliances has an associated selection box that the user can select or deselect to indicate whether the appliance is typically operated during time range 702. For example, refrigerator 706 has a selection box 708 that is in a selected state in FIG. 7. However, a user can deselect selection box 708 to remove the check mark and thereby indicate that refrigerator 706 is not typically operated between 9:00 p.m. and 10:00 p.m. User interface 700 also includes a submit button 710 that allows the user to submit feedback indicating which of the appliances are typically operated during the time range.

At step 226, communication engine 150 receives the user feedback and at step 228, communication engine 150 determines if a single device has been isolated as being responsible for the increase in power/energy use. If not, communication engine 150 provides narrowing questions or instructions at step 230.

FIG. 8 provides an example of a user interface 800 with a narrowing question designed to eliminate the possibility that a new appliance has been installed in the home that is responsible for the power increase detected in the peaks. In user interface 800, a pull down menu 802 is provided with a pull down control 804. When a user selects pull down control 804, a list of possible appliances is provided to the user and the user is able to select one of the appliances from the list to indicate that the appliance has been added or replaced in the last two weeks. If no new appliances have been added or no appliances have been replaced, the user can select control 806. The user then submits their feedback using submit button 808.

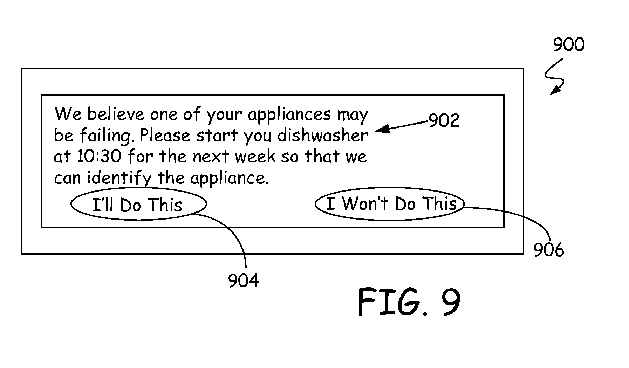

FIG. 9 provides a second example of a user interface provided by communication engine 150 to identify which appliance may be failing. In user interface 900, instructions 902 are provided to the user to change the time at which they operate an appliance. This time is selected to isolate the appliance's energy use from the energy use of other appliances. In particular, in FIG. 9, the user is instructed to begin their appliance at 10:30 for the next week. If the user agrees to start the appliance at the new time, they can select the "I'll Do This" button 904 which provides feedback to communication engine 150 that the user will attempt to start the appliance at the new time. Additional feedback is provided by the user actually starting the appliance at the new time. Thus, the power use associated with the act of starting the appliance at the requested time is a form of user feedback. If the user does not wish to start the appliance at the suggested time, the user can select "I Won't Do This" button 906 which will provide feedback to communication engine 150 that the appliance start time will not be changing.

The steps of providing narrowing questions or instructions 230 and receiving user feedback 226 are performed in a loop until the appliance responsible for the increase in power/energy use is isolated at step 228. When this occurs, communication engine 150 provides a user interface to the user through a mobile client 152 or PC client 154 that identifies the appliance that appears to be failing. This allows the user to request service for the failing appliance or replace the failing appliance. In a further embodiment, communication engine 150 provides rebate offers to the user through mobile client 152 or PC client 154 for replacing the failing appliance.

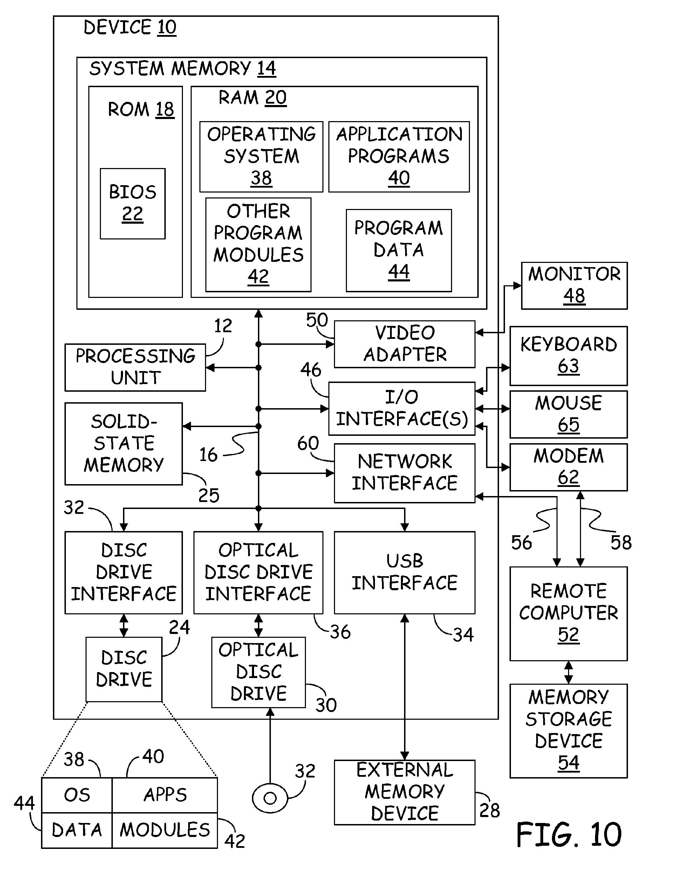

An example of a computing device 10 that can be used as a server and/or client device in the various embodiments is shown in the block diagram of FIG. 10. For example, computing device 10 may be used as analysis server 122, mobile client 152 or PC client 154. Computing device 10 of FIG. 10 includes a processing unit 12, a system memory 14 and a system bus 16 that couples the system memory 14 to the processing unit 12. System memory 14 includes read only memory (ROM) 18 and random access memory (RAM) 20. A basic input/output system 22 (BIOS), containing the basic routines that help to transfer information between elements within the computing device 10, is stored in ROM 18.

Embodiments of the present invention can be applied in the context of computer systems other than computing device 10. Other appropriate computer systems include handheld devices, multi-processor systems, various consumer electronic devices, mainframe computers, and the like. Those skilled in the art will also appreciate that embodiments can also be applied within computer systems wherein tasks are performed by remote processing devices that are linked through a communications network (e.g., communication utilizing Internet or web-based software systems). For example, program modules may be located in either local or remote memory storage devices or simultaneously in both local and remote memory storage devices. Similarly, any storage of data associated with embodiments of the present invention may be accomplished utilizing either local or remote storage devices, or simultaneously utilizing both local and remote storage devices.

Computing device 10 further includes a hard disc drive 24, a solid state memory 25, an external memory device 28, and an optical disc drive 30. External memory device 28 can include an external disc drive or solid state memory that may be attached to computing device 10 through an interface such as Universal Serial Bus interface 34, which is connected to system bus 16. Optical disc drive 30 can illustratively be utilized for reading data from (or writing data to) optical media, such as a CD-ROM disc 32. Hard disc drive 24 and optical disc drive 30 are connected to the system bus 16 by a hard disc drive interface 32 and an optical disc drive interface 36, respectively. The drives, solid state memory and external memory devices and their associated computer-readable storage media provide nonvolatile storage media for computing device 10 on which computer-executable instructions and computer-readable data structures may be stored. Other types of media that are readable by a computer may also be used in the exemplary operation environment.

A number of program modules may be stored in the drives, solid state memory 25 and RAM 20, including an operating system 38, one or more application programs 40, other program modules 42 and program data 44. For example, application programs 40 can include instructions for analysis engine 128 and communication engine 150.

Input devices including a keyboard 63 and a mouse 65 are connected to system bus 16 through an Input/Output interface 46 that is coupled to system bus 16. Monitor 48 is connected to the system bus 16 through a video adapter 50 and provides graphical images to users. Other peripheral output devices (e.g., speakers or printers) could also be included but have not been illustrated. In accordance with some embodiments, monitor 48 comprises a touch screen that both displays input and provides locations on the screen where the user is contacting the screen.

Computing device 10 may operate in a network environment utilizing connections to one or more remote computers, such as a remote computer 52. The remote computer 52 may be a server, a router, a peer device, or other common network node. Remote computer 52 may include many or all of the features and elements described in relation to computing device 10, although only a memory storage device 54 has been illustrated in FIG. 10. The network connections depicted in FIG. 10 include a local area network (LAN) 56 and a wide area network (WAN) 58. Such network environments are commonplace in the art.

Computing device 10 is connected to the LAN 56 through a network interface 60. Computing device 10 is also connected to WAN 58 and includes a modem 62 for establishing communications over the WAN 58. The modem 62, which may be internal or external, is connected to the system bus 16 via the I/O interface 46.

In a networked environment, program modules depicted relative to computing device 10, or portions thereof, may be stored in the remote memory storage device 54. For example, application programs may be stored utilizing memory storage device 54. In addition, data associated with an application program may illustratively be stored within memory storage device 54. It will be appreciated that the network connections shown in FIG. 10 are exemplary and other means for establishing a communications link between the computers, such as a wireless interface communications link, may be used.

Although elements have been shown or described as separate embodiments above, portions of each embodiment may be combined with all or part of other embodiments described above.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of predicting failure of an appliance, the method comprising:
accessing multiple days of aggregate power use data for a home;
identifying a failing appliance using a computing device executing instructions that cause the computing device to perform steps of:
searching for peaks in the power use data that occurred during different days in the multiple days;
determining that a peak during a later day of the multiple days has a larger magnitude than a peak during an earlier day of the multiple days;
identifying an appliance responsible for the larger magnitude of the peak during the later day; and
transmitting a user interface to a user device to indicate that the identified appliance is failing.

2. The method of claim 1 further comprising before searching for peaks in the power use data, filtering the power use data to remove peaks that occur on days with unusual weather.

3. The method of claim 1 wherein searching for peaks in the power use data comprises setting a peak range and identifying all peaks within the peak range.

4. The method of claim 1 wherein identifying an appliance comprises applying a time of day of at least one peak to a use template.

5. The method of claim 4 wherein identifying an appliance further comprises utilizing power consumption specifications for appliances.

6. The method of claim 5 wherein identifying an appliance further comprises providing a user interface listing predicted appliances to a user and receiving an indication of which of the predicted appliances were operated during a time period.

7. The method of claim 5 wherein identifying an appliance further comprises providing a user interface with an instruction to turn on an appliance at a specified time.

8. The method of claim 7 further comprising selecting the specified time to isolate an appliance's power consumption from other appliances' power consumption.

9. The method of claim 1 wherein transmitting a user interface to a user device to indicate that the identified appliance is failing comprises transmitting rebate information for purchasing a new appliance to replace the identified appliance.

10. A system comprising:
a power use database that receives and stores power use data for a home;
an analysis engine that identifies increasing peaks in the use data;
a communication engine that receives feedback from a user to isolate an appliance operating during a peak in the use data and that indicates that the appliance is failing to a user.

11. The system of claim 10 wherein before identifying increasing peaks in the use data, the analysis engine filters the use data based on weather data to remove use data associated with weather that alters power use.

12. The system of claim 10 wherein the analysis engine identifies increasing peaks by setting a range of peak values, identifying all peaks within the range of peak values, and determining if the identified peaks are increasing over time.

13. The system of claim 10 wherein the analysis engine further identifies a list of possible appliances operating during a peak in use based on at least one template of use.

14. The system of claim 13 wherein the communication engine further provides a user interface to solicit feedback from the user wherein the user interface requests confirmation of which of a list of possible appliances was on during a designated time period.

15. The system of claim 10 wherein the communication engine further provides a user interface to solicit feedback from the user wherein the user interface requests that the user turn on an appliance during a specified time period and wherein the feedback comprises the user turning on the appliance during the specified time period.

16. A computer-readable storage medium having computer-executable instructions that cause a processor to perform steps comprising:
accessing a memory to retrieve power use data for a home;
requesting weather data for an area around the home;
filtering the power use data to remove power use data associated with days when an outside temperature was unusual to form filtered power use data;
grouping peaks in the filtered power use data into groups;
determining that peaks within a group have increased over time;
identifying possible appliances that operated during the peaks of the group;
receiving feedback to isolate an appliance that caused the increase in the peaks over time; and
transmitting a notification that the isolated appliance is failing.

17. The computer-readable storage medium of claim 16 wherein identifying possible appliances that operated during the peaks of the group comprises using a template of appliances used during a period of time associated with at least one of the peaks.

18. The computer-readable storage medium of claim 16 wherein the power use data comprises aggregate power use data for the home as a whole.

19. The computer-readable storage medium of claim 16 wherein receiving feedback comprises receiving an indication of which of the possible appliances was actually operated during the peaks.

20. The computer-readable storage medium of claim 16 wherein receiving feedback comprises receiving new power use data.

21. The computer-readable storage medium of claim 20 wherein the new power use data comprises power use data for a period of time when an appliance was operated after the processor instructed a user to operate the appliance during that period of time.
